# EUROPEAN PATENT APPLICATION

(11) **EP 0 777 376 A1**
(43) Date of publication of application: **04.06.1997**
(21) Application number: 96119113.7
(22) Date of filing: 28.11.1996
(51) Int. Cl.: H04N 1/40, H04N 1/407

(54) **Image forming apparatus**

(30) Priority: 30.11.1995 JP 313304/95
(71) Applicant: KABUSHIKI KAISHA TOSHIBA, Kawasaki-shi (JP)
(72) Inventor: Sasama, Kazuo, 1-1 Shibaura 1-chome,Minato-ku Tokyo 105 (JP); Tanimoto, Koji, 1-1 Shibaura 1-chome,Minato-ku Tokyo 105 (JP)
(74) Representative: Blumbach, Kramer & Partner

(57) **Abstract**

Gradation image data read by a scanner (140) is processed by an image processor (301) according to an image mode of character or photograph set by a mode setting button (920) on a control panel (305) and stored as binary image data into a memory (303). The binary image data stored in the memory (303) is converted into a pulse which is subjected to the pulse width modulation in an image processing circuit (101) of a laser printer (160) according to the image mode and changing density data selected by a density changing button (501) on the control panel (305). The laser printer (160) drives a laser device according to the pulse for form an image of high or low density.

## Description

This invention relates to an image forming apparatus such as a digital copying machine capable of converting gradation data read by, for example, a scanner into binary image data, storing the binary image data into a memory, changing the density of the stored binary image data and then outputting the same via a laser printer.

Conventionally, since an image forming apparatus such as a laser printer records data in the unit of one dot, halftone cannot be recorded, and images such as characters and diagrams having no gradation are formed by simply converting image data into a binary form and images such as photographs having gradations are formed by using an organizational dither method or area gradation method as a method for converting data into a binary form while maintaining the gradation.

Recently, for the laser printer, a pulse-width modulation method for making the pulse width of the laser driving pulse variable to enhance the reproducibility of thin lines and attain the representation of gradation is proposed (refer to Japanese Patent Application No. 1-79571).

In a digital copying machine including a laser printer having a memory for storing binary image data, the following process is effected in a case where the whole image density is changed by depressing a density changing button of the digital copying machine when gradation image data read by a scanner is converted into binary image data and temporarily stored in the memory and then the stored binary image data is output via the laser printer.
(1) The density is not changed (or cannot be changed).
(2) Since the minimum size of the white/black elements of the laser printer is one pixel unit, the image data processing for reducing the number of black pixels in order to lower the whole density and increasing the number of black pixels around the original black pixels in order to enhance the whole density is effected by use of the software process on the memory.
(3) The density is changed by changing the process conditions to change the amount of toner to be attached.

However, the fact that the density cannot be changed as described in the item (1) is a problem, the software process used in the item (2) takes a long time, and the item (3) has a problem that toner will be attached to a white image of background when the whole density is increased by changing the process conditions.

Accordingly, an object of this invention is to provide an image forming apparatus capable of changing and processing the whole density without taking a long processing time and attaching toner on the white image when the image density is increased.

In order to attain the above object, an image forming apparatus according to this invention comprises means for specifying the density used when an image is formed by use of binary image data; and means for processing the binary image data according to data of the specified density to generate multivalued gradation data. Laser light corresponding to the multivalued gradation data is applied to a photosensitive drum to form an image. Since the multivalued gradation data corresponds to the binary image data and density data, the density of an image to be formed varies according to the density data.

When the image density is increased, the density of white pixels adjacent to one black pixel is increased, and when the image density is lowered, the density of one black pixel itself is lowered.

The driving pulse for driving the semiconductor laser according to the multivalued gradation data is modulated according to the pulse width from the rise of each image or the pulse width with the center thereof set to correspond to the central portion of each pixel.

This invention can be more fully understood from the following detailed description when taken in conjunction with the accompanying drawings, in which:
FIG. 1 is a view schematically showing the whole structure of a digital copying machine as an image forming apparatus;
FIG. 2 is a block diagram showing the whole construction of a digital copying machine relating to an image forming apparatus according to one embodiment of this invention;
FIG. 3 is a view showing a density changing button section which is part of a control panel;
FIG. 4 is a block diagram showing the schematic construction of the internal portion of a laser printer;
FIG. 5 is a block diagram showing the construction of a portion which is part of an internal structure of an image processing circuit, for converting binary image data into multivalued image data;
FIG. 6 is a diagram showing a signal conversion table used in a decoder;
FIGS. 7A to 7D are diagrams for illustrating the pixel density changing process for adjacent pixels in a case where the density is increased when two black pixels are successively arranged;
FIGS. 8A to 8C are diagrams for illustrating the process for conversion from a multivalued image data output of one pixel obtained by signal conversion from the decoder into a laser ON/OFF pulse;
FIG. 9 is a view showing the schematic structure of a processing section of the laser printer used in the digital copying machine 1;
FIGS. 10A to 10D are diagrams showing the relation between the laser beam emission time and the printed state;
FIG. 11 is a diagram showing the periods of time of application of the laser beam to the photosensitive drum which are changed to change the density by the pulse width modulation;
FIG. 12 is a diagram showing the periods of time of application of the laser beam to the photosensitive drum which are changed to change the density by the pulse width modulation;
FIGS. 13A to 13C are diagrams showing the printed states of a halftone image by the error diffusion method for each pixel unit;
FIGS. 14A to 14C are diagrams showing the printed states of a halftone image by the error diffusion method for each pixel unit;
FIG. 15 is a flowchart for illustrating the operation for changing the density in the laser printer;
FIG. 16 is a block diagram showing the whole construction of a digital copying machine with a FAX board for storing binary image data into a memory;
FIG. 17 is a block diagram showing the whole construction of a digital copying machine with LAN I/F for storing binary image data into a memory;
FIG. 18 is a view showing a mode setting button section which is part of the control panel;
FIG. 19 is a diagram for illustrating the process of selecting one of image processing circuits in an image processor;
FIG. 20 is a diagram for illustrating the process of selecting one of pulse width modulation circuits in a pulse width modulation circuit; and
FIG. 21 is a diagram for illustrating a method for processing image data read by the scanner in the image processor and storing thus obtained image processing mode data of page unit into the memory.

There will now be described an embodiment of this invention with reference to the accompanying drawings.

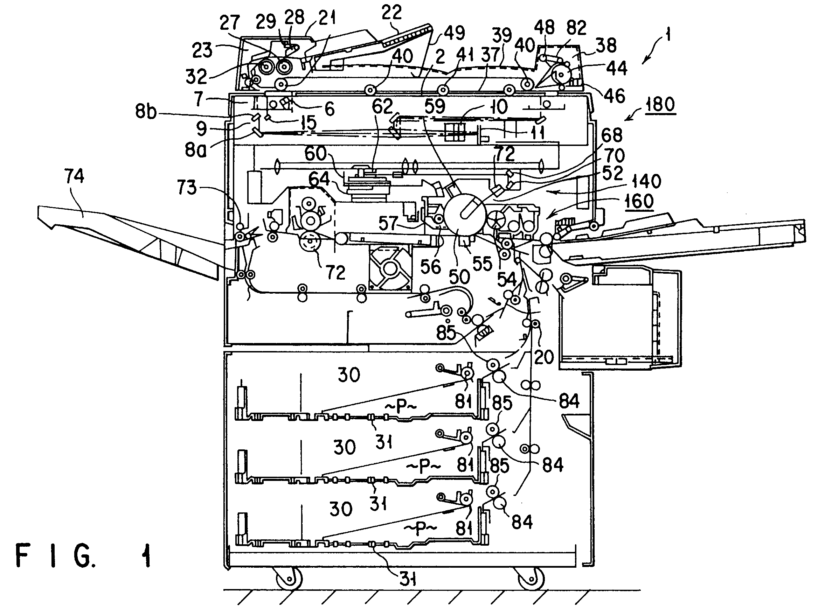

FIG. 1 schematically shows the whole structure of a digital copying machine as an image forming apparatus according to one embodiment of this invention. A digital copying machine 1 includes a scanner 140 as reading means and a laser printer 160 as image forming means and an auto document feeder (ADF) 180 is mounted on the upper portion of the digital copying machine.

The scanner 140 includes an exposure lamp 6 as a light source, a first carriage 7 having a mirror 15 mounted thereon, a second carriage 9 on which mirrors 8a, 8b for changing the direction of the optical path are mounted, a lens 10, a photoelectric converter 11 for receiving reflected light, a driving system (not shown) for changing the positions of the above elements, and an A/D converter (not shown) for converting an output of the photoelectric converter 11, that is, image data from the analog form into the digital form. The first and second carriages 7, 9 are coupled together by use of a timing belt (not shown) and the second carriage 9 is moved in the same direction as and at the half speed of the first carriage 7. With this construction, the scanning operation can be effected with the optical path length to the lens 10 kept constant. The lens 10 has a fixed focal distance and is moved in the optical axis direction at the time of change of the multiplication. The photoelectric converter 11 photoelectrically converts reflected light from the document and is constructed mainly by a CCD line image sensor, for example. In this case, one pixel on the document corresponds to one element of the CCD sensor. An output of the photoelectric converter 11 is supplied to the A/D converter. The first, second carriages 7, 9 and mirrors 8a, 8b are driven by a stepping motor (not shown). The first and second carriages are moved according to the operations of timing belts (not shown) stretched between drive pulleys (not shown) connected to the rotating shaft of the stepping motor and idle pulleys (not shown). The lens 10 is moved in the optical axis direction by the movement of a spiral shaft (not shown) which is rotated by a corresponding stepping motor (not shown).

A reference numeral 60 denotes a semiconductor laser and a collimator lens 62, polygon mirror 64, lens 66, reflection mirrors 68, 70, and lens 71 are arranged in position corresponding to the semiconductor laser 60 so as to permit the laser beam from an exposure device 52 to be applied to a photosensitive drum 50.

The laser printer 160 has a combination of a laser optical system and an electrophotographic system capable of forming an image on copy paper P used as an image forming medium, for example. That is, the laser printer 160 has the photosensitive drum 50 as an image carrier pivoted at substantially the central portion in the apparatus, and the exposure device 52, developing unit 54, transfer charger 55, discharging lamp 56, cleaner 57 and electric charger 59 are sequentially arranged around the photosensitive drum 50. The photosensitive drum 50 is uniformly charged by the charger 59 and an image of the document is formed on the photosensitive drum 50 by applying a laser beam from the semiconductor laser 60 to the photosensitive drum so as to form an electrostatic latent image thereon.

The electrostatic latent image formed on the photosensitive drum 50 is developed by the developing unit 54, a developed image is transferred to copy paper P which is fed from a paper feeding cassette 30 as paper feeding means as will be described later via a resist roller 20 by a transfer charger 55, the copy paper P is fed to a fixing unit 72 via a conveyer belt to fix the developed image on the paper by melting the developing powder on the paper, and the copy paper P on which the developed image is fixed by the fixing unit 72 is discharged onto a paper discharging tray 74 by a paper discharging roller 73. On the other hand, the photosensitive drum 50 after transfer of the developed image to the copy paper P is de-electrified by the discharging lamp 56 and the remaining developing powder which is not transferred onto the paper and left behind on the photosensitive drum 50 is cleaned by the cleaner 57 so as to make ready for the next copying operation.

A reference numeral 30 denotes paper feeding cassettes which can be removably mounted on a plurality of stages from the front side of the apparatus main body 1. The paper feeding cassette 30 includes a box-form cassette case 31 having sheets of copy paper P received therein and the take-out end portion of the cassette case 31 is inclined in the paper take-out direction. Sheets of copy paper P received in the cassette case 31 of the paper feeding cassette 30 are sequentially picked up and taken out from the uppermost paper by a corresponding pick-up roller 81. The copy paper P taken out by the pick-up roller 81 and fed to the take-out end portion of the cassette case 31 is separated for each sheet by a paper separating section constructed by a paper feeding roller 84 disposed inside and above the take-out end portion of the cassette case 31 and a separation roller (or separation pad) 85 and fed towards the laser printer 160.

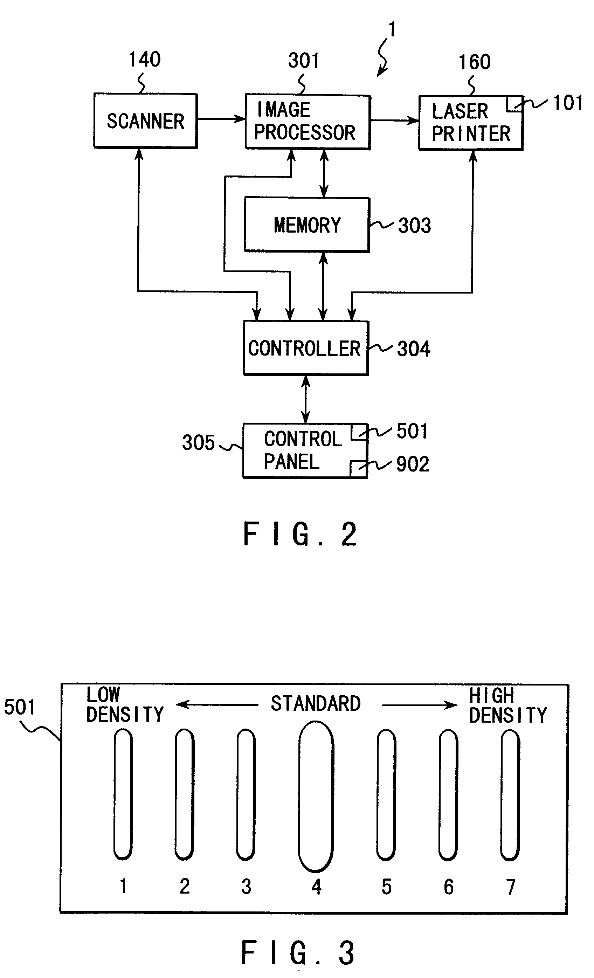

FIG. 2 shows the whole construction of the digital copying machine 1 relating to the image forming apparatus according to this invention. That is, the digital copying machine 1 includes the scanner 140 for reading and fetching image data, an image processor 301 for processing the image data, a memory 303 as storage means for storing the processed image data, the laser printer 160 for printing the processed image data on paper, a control panel which is an input device for controlling the operation of the digital copying machine 1 from the exterior, and a controller 304 for effecting the centralized control for the scanner 140, image processor 301, laser printer 160, memory 303, and control panel 305.

FIG. 3 shows a density changing button section 501 which is part of the control panel 305. The density changing button section 501 used as specifying means has seven buttons, and when one of the buttons is depressed, a corresponding density level is selected. An LED is attached to each button and the LED which corresponds to a selected one of the buttons is turned ON so as to inform the user of the selected density.

Normally, the button "4" is selected. The button "4" indicates a standard density level. When a button having a number smaller than "4" is selected, the density of the printing becomes lower than the standard density, and when a button having a number larger than "4" is selected, the density of the printing becomes higher than the standard density.

Generally, when the copying operation is effected, the controller 304 transfers multivalued image data read by the scanner 140 to the image processor 301 as it is, converts the image data into multivalued gradation data which corresponds to the density selected by the density changing button section 501 in the image processor 301 and transfers the multivalued gradation data to the laser printer 160, and then the laser printer 160 prints the image with the density corresponding to the multivalued gradation data.

In a case where image data is temporarily stored in the memory 303, the image data is converted into binary image data in the image processor and then stored in the memory 303 so as to permit a large number of pages to be stored into the memory 303.

In a case where binary image data is stored into the memory 303, binary image data of each pixel is converted into black data or white data according to whether the density of the image data is higher or lower than that of a preset density reference multivalued data at the time of conversion from the multivalued data into binary data in the image processor 301. The density changing button section 501 is operated to set the density reference multivalued data to a large value when it is desired to make the density of the printed image low and to a small value when it is desired to make the density of the printed image high.

Conventionally, since binary image data temporarily stored in the memory 303 is binary data indicating black or white for each pixel when it is printed by the laser printer 160, the operation of the density changing button section is made ineffective if the image data is transferred to the laser printer 160 as it is.

Alternatively, if binary image data stored in the memory 303 is processed by use of software to enhance the density according to the density selecting operation of the density changing button section 501, part of white pixels are converted into black pixels, and if the above operation is effected to lower the density, part of the black pixels are converted into white pixels, but it takes a long time for processing one sheet of printing paper because of the software processing, thereby lowering the printing speed.

Further, the process condition of the laser printer 160 is changed according to the density selecting operation of the density changing button section 501 so as to control the amount of toner attached to the photosensitive drum 50 and change the whole printing density, but there occurs a problem that toner will attach to the white image of background when the whole density is enhanced.

Therefore, in order solve the above problems, in this invention, density data determined according to the density selecting operation of the density changing button section 501 is transferred to the laser printer 160 as changing density data and the density changing process is effected in the laser printer 160.

Next, the construction of the laser printer 160 of this invention is explained.

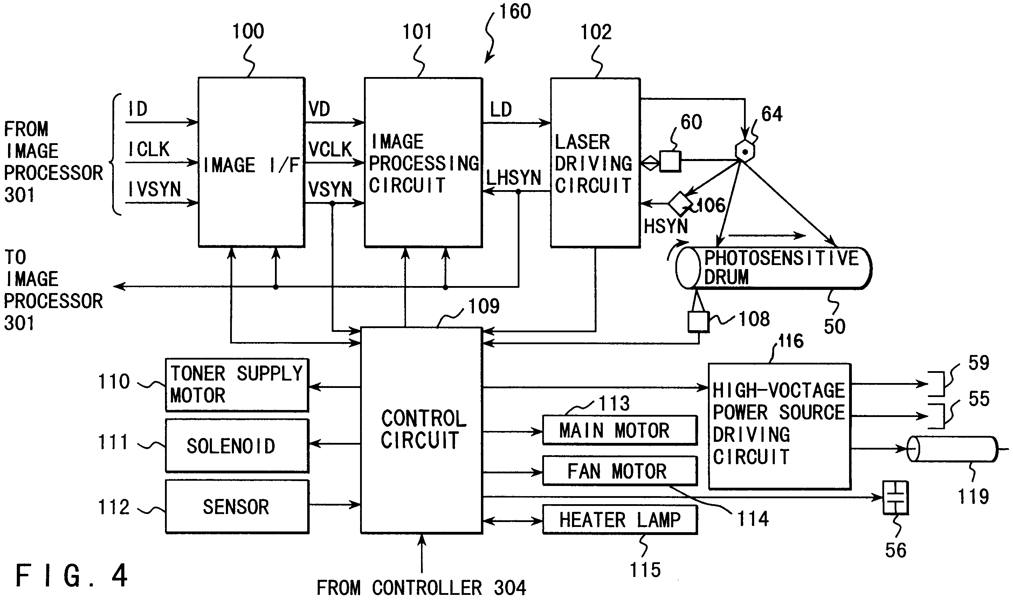

FIG. 4 shows the schematic construction of the internal portion of a laser printer 160.

First, binary image data ID transferred from the image processor 301 is input to an image interface (I/F) 100 in synchronism with a transfer clock ICLK. The image I/F 100 transfers binary image data to an image processing circuit 101 as binary image data VD which is synchronized with a transfer clock VCLK generated in the laser printer 160.

The image processing circuit 101 converts the binary image data VD into a pulse signal LD used for causing a laser driving circuit 102 to activate or deactivate the semiconductor laser 60 and outputs the pulse signal LD to the laser driving circuit 102. The laser driving circuit 102 activates or deactivates the semiconductor laser 60 according to the ON/OFF timings of the pulse signal LD. The laser beam emitted from the semiconductor laser 60 scans the photo-sensitive drum 50 by rotation of the polygon mirror 64. Further, by rotation of the photosensitive drum 50, a 2-dimensional electrostatic latent image is formed by the laser beam on the photosensitive drum 50. According to the electrostatic latent image formed on the photosensitive drum 50, a toner image is formed on the copy paper P by a process as will be described later.

In the semiconductor laser 60, a photodiode for monitoring the intensity of the laser beam is provided. The intensity of the laser beam converted into an electrical signal by the monitoring photodiode is fed back to the laser driving circuit 102 and used as a feedback signal for keeping the output of the laser beam stable.

The laser driving circuit 102 used as laser driving means also includes a driving circuit of a polygon motor for rotating the polygon mirror 64.

The laser beam reflected from the polygon mirror 64 is input to the photodiode 106 to generate a horizontal synchronization signal HSYN. The horizontal synchronization signal HSYN is subjected to the waveform shaping process in the laser driving circuit 102 and output as a horizontal synchronization signal LHSYN to the image processing circuit 101, image I/F 100 and image processor 301 and used as the horizontal synchronization signal of the image data.

A vertical synchronization signal IVSYN is supplied from the image processor 301 to the image I/F 100 and input to the image processing circuit 101 and control circuit 109 as a vertical synchronization signal VSYN used in the laser printer 160. The image data ID from the image processor 301 is transferred to the image I/F 100 in the laser printer 160 in synchronism with the vertical synchronization signal IVSYN and horizontal synchronization signal LHSYN. In this case, the vertical synchronization signal IVSYN is a synchronization signal which is generated one pulse for each page and the horizontal synchronization signal LHSYN is a synchronization signal which is generated one pulse for each line.

The image data VD is transferred from the image I/F 100 to the image processing circuit 101 in synchronism with the vertical synchronization signal VSYN and horizontal synchronization signal LHSYN. The vertical synchronization signal VSYN is input to the control circuit 109 to adjust the paper feeding timing.

The control circuit 109 controls the image I/F 100, image processing circuit 101 and laser driving circuit 102. Particularly, the control circuit 109 transfers changing density data determined by the selecting operation of the density changing button section 501 on the control panel 305 and transferred from the controller 304. As a result, a setting parameter used for a portion of the image processing circuit 101 for converting binary image data into multivalued image data is set.

A toner density sensor 108 detects the toner density on a non-image area of the photosensitive drum 50 and the control circuit 109 controls the operation of a toner supply motor 110 according to the detected toner density. Further, the control circuit 109 receives signals from a sensor 112 and the like and generates timing signals to drive the respective portions, control the ON/OFF states of a main motor 113, solenoid 111, cooling fan motor 114 and the ON/OFF state of the discharging lamp 56, and control the ON/OFF state and output setting of high-voltage outputs of the developing bias to the developing roller 119, transfer charger 55 and electric charger 59 by controlling a high-voltage power source driving circuit 116. Further, the control circuit 109 controls the ON/OFF state of a heater lamp 115 in the fixing unit 72 to keep the fixing temperature at a constant level.

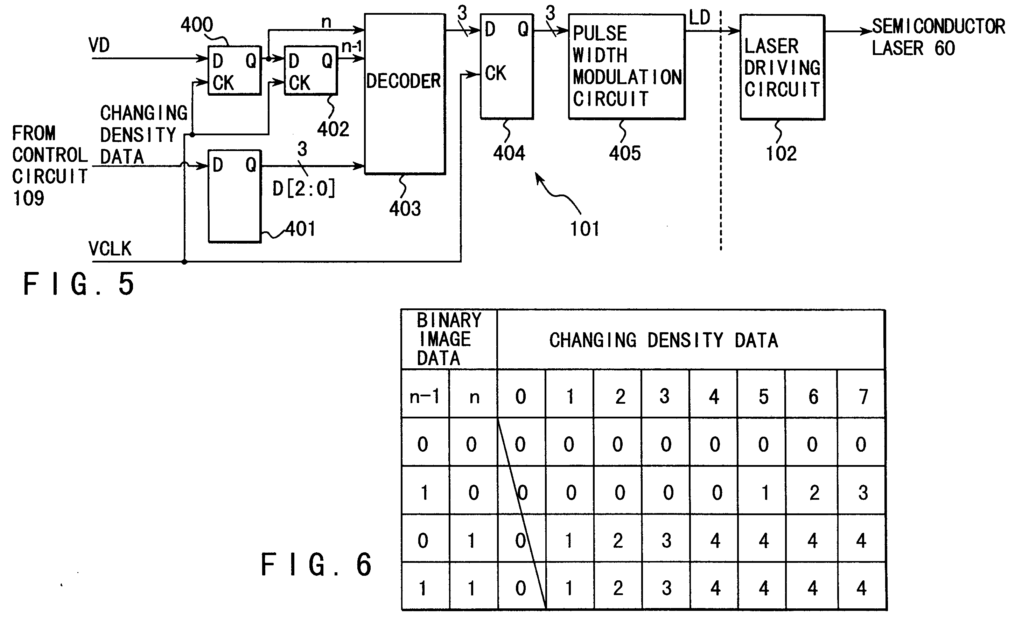

FIG. 5 shows the construction of a portion which is part of the internal structure of the image processing circuit 101, for converting binary image data into multivalued image data.

Binary image data transferred from the image processor 301 is converted into a signal which is synchronized with the image clock VCLK (one period for each pixel) generated in the laser printer 160, latched by a flip-flop 400 and further latched by a flip-flop 402.

In the image data latched by the flip-flop 400 and flip-flop 402, if the image data latched by the flip-flop 402 is (n-1)th data, then the image data latched by the flip-flop 400 is n-th data.

The n-th and (n-1)th image data items are converted into multivalued image data according to density changing data D[2:0] by a decoder 403. The density changing data D is data which is selected by the density selecting operation of the density changing button section 501 on the control panel 305 and set into a register 401 by the control circuit 109. In this case, D[2:0] indicates that the density changing data D is constructed by three bits of bit "0" to bit "2". A flip-flop 404 is used to synchronize the output of the decoder 403 with the image clock VCLK.

The multivalued image data is converted into a laser driving ON/OFF signal by a pulse width modulation circuit 405. The laser driving circuit 102 activates the semiconductor laser 60 to emit a laser beam which is applied to the photosensitive drum 50 according to the laser ON/OFF signal.

FIG. 6 shows a signal conversion table used in the decoder 403. "1" of the binary image data (n-1, n) indicates black and "0" indicates white. The changing density data ("0" to "7") indicates a value selected by the density changing button section 501, the value "4" indicates a standard density level (the density is not changed), when the number becomes smaller in the order of "3", "2", "1", the density becomes lower, and when the number becomes larger in the order of "5", "6", "7", the density becomes higher.

An output value of the decoder 403 takes a value of multivalued image data "0" to "4" for each pixel. The multivalued image data "0" to "4" indicate values "0" : (0/4)*T, "1" : (1/4)*T, "2" : (2/4)*T, "3" : (3/4)*T, "4" : (4/4)*T which are obtained by dividing the period T of laser application time for one pixel into five levels. However, the time period is not necessarily divided equally and the number of divisions is not necessarily set to five.

FIGS. 7A to 7D illustrate an example of the pixel density changing process for adjacent pixels in a case where the density is increased when two black pixels are successively arranged. FIG. 7A shows the state before the density changing process is effected and pixels (1) and (2) are black pixels and a pixel (3) is a white pixel.

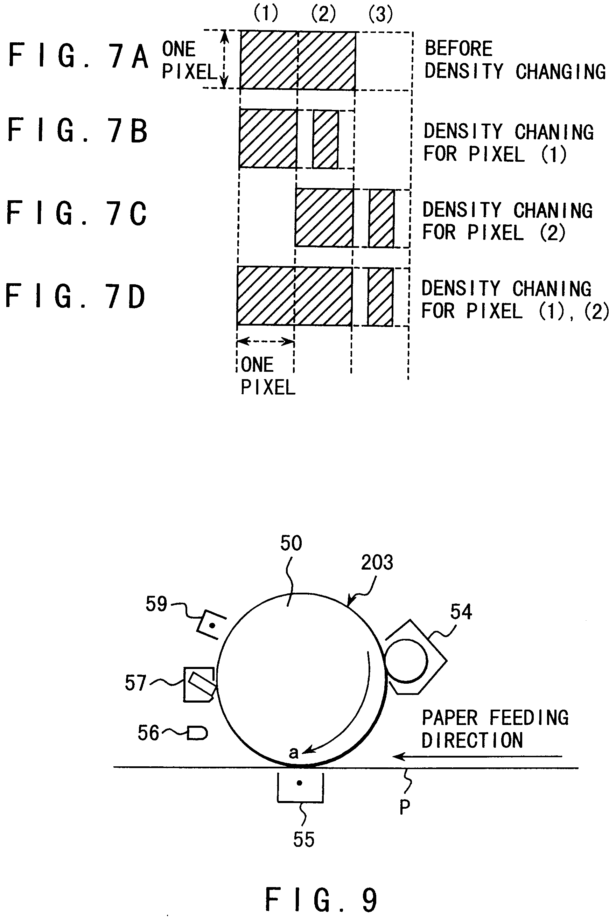

If the density changing process is effected only for the pixel (1) as shown in FIG. 7B, part of the adjacent pixel (2) becomes black, and if the density changing process is effected only for the pixel (2) as shown in FIG. 7C, part of the adjacent pixel (3) becomes black.

If the density changing process is effected for the pixels (1), (2) as shown in FIG. 7D, the result of a combination of the above two cases is obtained, but the pixel (2) is already a black pixel before the density changing process is effected, and therefore, the density change for the pixel (2) caused by the density changing process for the pixel (1) is neglected.

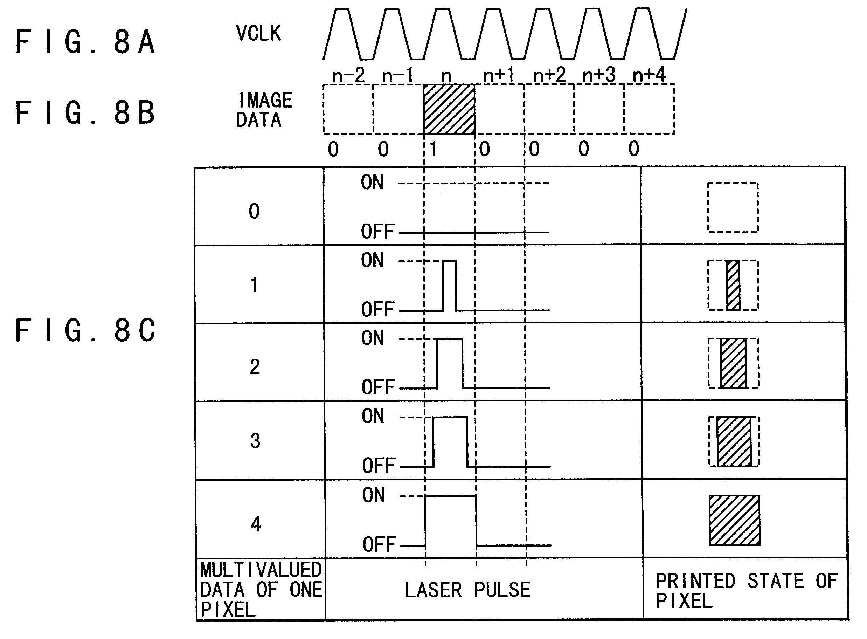

FIGS. 8A to 8C illustrate an example of the process for converting a multivalued image data output of one pixel from the decoder 403 into a laser ON/OFF pulse by means of the pulse width modulation circuit 405. FIG. 8A shows the image clock VCLK, and FIG. 8B shows image data synchronized with the image clock VCLK.

The pulse width modulation circuit 405 used as modulation means generates a laser ON/OFF signal according to the value of multivalued image data "0" to "4" of one pixel converted in the decoder 403. As shown in FIG. 8C, multivalued data "0" of one pixel indicates no laser pulse ON time, the length of laser pulse ON time is increased as the value of data is increased from "1" to "4", and the laser pulse is set ON for the period of one pixel when the value of data is set to "4". As the length of laser ON time becomes longer, the area of the black portion of the n-th pixel increases.

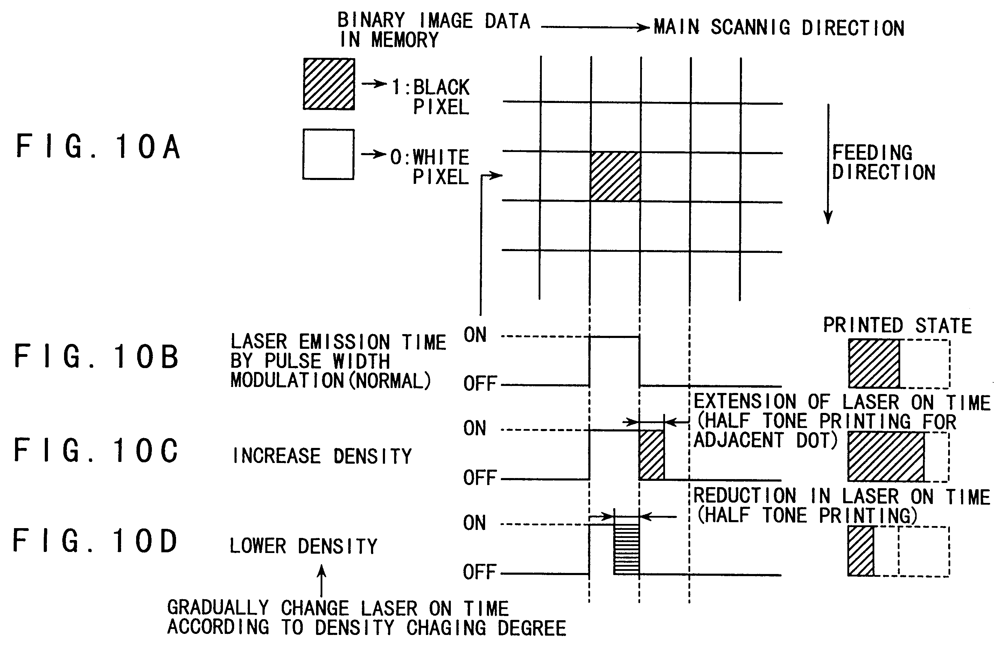

FIG. 9 shows the schematic structure of a processing section of the laser printer 160 used in the digital copying machine 1.

The photosensitive drum 50 is rotated at a constant speed in a direction indicated by an arrow a. The electric charger 59, laser beam 203 as exposure means, developing unit 54, transfer charger 55, discharging lamp 56, and cleaner 57 are arranged in this order in the rotating direction a around the photosensitive drum 50.

At the time of image formation, the photosensitive drum 50 is rotated and the surface of a portion thereof which has passed the electric charger 59 is uniformly charged. The laser beam 203 is applied to the charged surface portion of the photosensitive drum 50 according to image data. The surface potential of the photosensitive drum 50 to which the laser beam is applied varies to form an electrostatic latent image corresponding to the image data on the photosensitive drum. The latent image is developed and converted into a visible image by supplying toner onto the latent image when it passes the developing unit 54.

Further, when copy paper P is supplied from a paper feeding section (not shown) to the transfer charger 55, the visible image (toner image) on the photosensitive drum 50 which is developed by the developing unit 54 is transferred onto the copy paper P by means of the transfer charger 55. The copy paper P onto which the visible image is transferred is fed to the fixing unit 72 and the toner image on the copy paper P is heated, pressed and fixed on the copy paper P.

After the image transfer, the photosensitive drum 50 is discharged by the discharging lamp 56. The toner which is not transferred and is left behind on the photosensitive drum 50 is cleaned by the cleaner 57 and the cleaned surface portion of the photosensitive drum 50 reaches the electric charger 59 again.

The laser printer 160 successively effects the printing operation by repeatedly effecting the above process.

FIGS. 10A to 10D show one example of the relation between the laser beam emission time and the printed state. That is, FIG. 10A shows binary image data in the memory 303, FIG. 10B shows a case wherein the density changing process is not effected, FIG. 10C shows a case wherein the density changing process is effected, and FIG. 10D shows the laser beam emission time and the printed state in a case wherein the density is lowered.

As shown in FIG. 10B, if the density changing process is not effected, the laser beam is emitted only for a period of time in which the laser beam scans a black pixel portion. In the process of the laser printer 160, toner is attached only to a portion of the photosensitive drum 50 to which the laser beam is applied so as to make the portion black. As a result, an area corresponding to one pixel becomes black if the process condition is adequate. In the drawing, the black pixel is schematically represented by a square form of one pixel.

As shown in FIG. 10C, if the density is enhanced, the laser beam is applied to a pixel adjacent to the main scanning direction for a period of time half the laser beam scanning time for one pixel. As a result, in the adjacent pixel which is originally a white pixel, a half area of the pixel is printed black.

As shown in FIG. 10D, if the density is lowered, the laser beam application time for a target pixel is reduced to half so as to reduce the black printing area to half.

In the case of FIGS. 10A to 10D, the laser beam is applied to the adjacent pixel for a period of time which is half the laser beam scanning time for one pixel when it is required to enhance the density, and the laser beam application time for a target pixel is reduced to half the laser beam application time for one pixel when it is required to lower the density, but in practice, the laser beam application time is gradually changed to change the black printing area according to the degree of density variation.

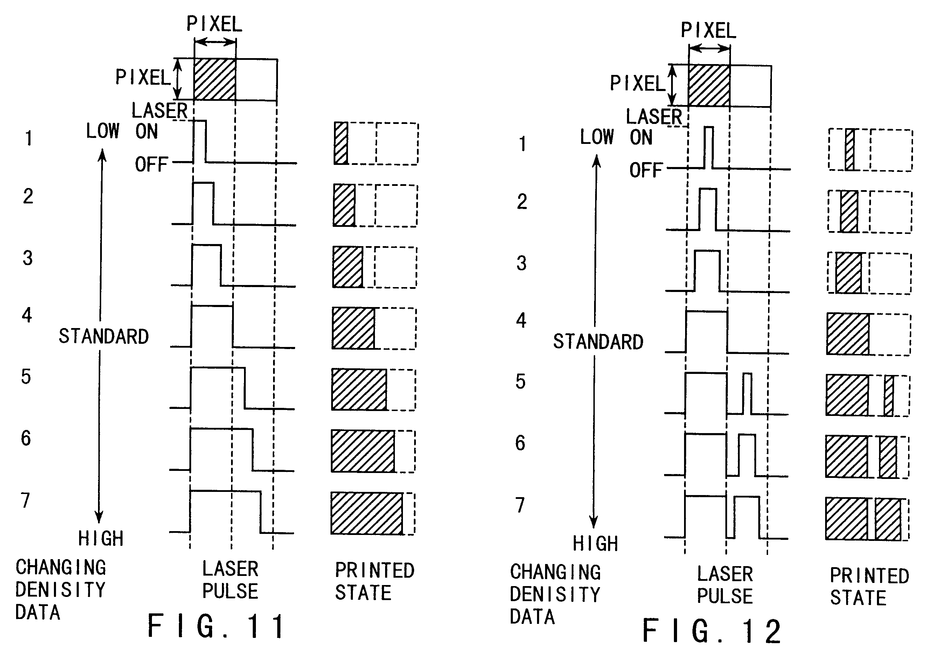

FIGS. 11 and 12 show the time of laser beam application to the photosensitive drum 50 to change the density according to the pulse width modulation.

When the density is lowered, the application time is changed in three stages. In order to further lower the density, the pulse application time is reduced to reduce an attached amount of toner.

When the density is enhanced, the laser beam application time for a target pixel is set to that for one pixel and the laser beam application time for an adjacent pixel is changed in three stages. In order to further enhance the density, the laser beam application time is extended to increase an amount of toner attached to the adjacent pixel.

FIG. 11 shows a method for gradually increasing the area of a black portion starting from the left end portion of the target pixel. This method is effective when it is required to keep the sharpness of the edge portion of a character image, for example, and since the area of a black portion increases in position adjacent to the black pixel, the edge portion will not blur.

The changing density data is divided into stages "1" to "7" and the stage "4" indicates the standard density for which the density changing process is not effected. The density becomes lower as the stage is gradually lowered from the stage "4" towards the stage "1" and the density becomes higher as the stage is gradually enhanced from the stage "4" towards the stage "7". For example, when the density changing data is set at the stage "1", the laser pulse is minimum and the printed state is set such that the black printed portion extending from the leftmost end has the smallest area (lowest density). On the other hand, when the density changing data is set at the stage "7", the laser pulse is maximum and the printed state is set such that the black printed portion extending from the leftmost end has the largest area (highest density).

FIG. 12 shows a method for gradually increasing the area of a black portion starting from the central portion of a target pixel or an adjacent pixel. This method is effective when the gradation image processing for a photographic image, for example, is effected, and in this case, since black images are not concentrated and an white image is inserted between the black image and an adjacent image to separate the images, the whole image can be observed as a halftone image.

The changing density data is divided into stages "1" to "7" and the stage "4" indicates the standard density for which the density changing process is not effected. The density becomes lower as the stage is gradually lowered from the stage "4" towards the stage "1" and the density becomes higher as the stage is gradually enhanced from the stage "4" towards the stage "7". For example, when the density changing data is set at the stage "1", the laser pulse is limited to a pulse of minimum pulse width at the center of a target pixel and the printed state indicates the lowest density. On the other hand, when the density changing data is set at the stage "7", the laser pulse is constructed by a full-width pulse for the target pixel and a pulse of maximum pulse width for the adjacent pixel so that the sum of the pulse widths thereof becomes maximum and the printed state indicates the highest density.

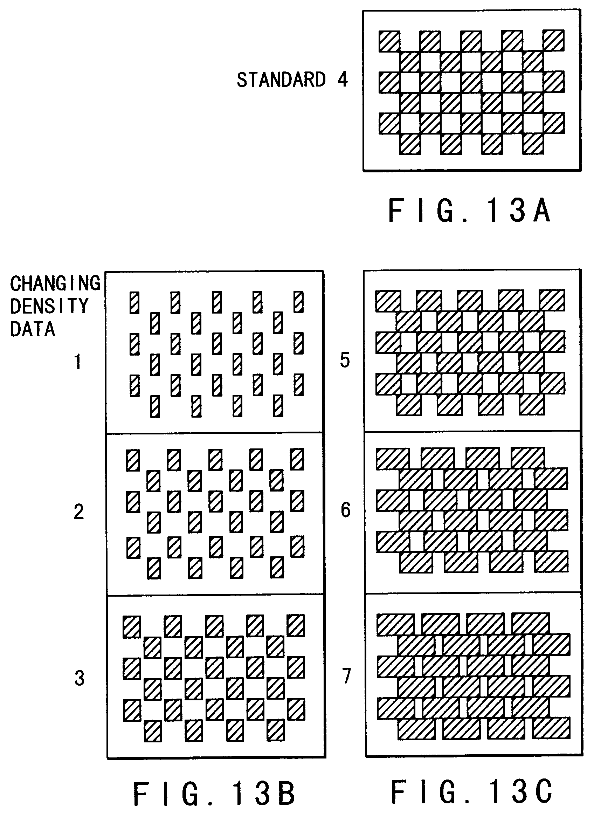

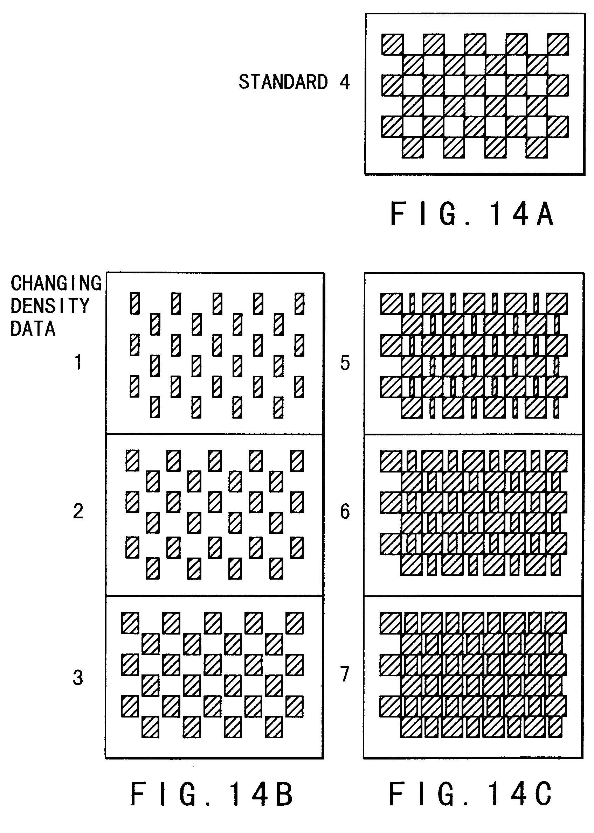

FIGS. 13A to 13C and FIGS. 14A to 14C show the printed states obtained by effecting the density changing process of this invention for a halftone image by use of the error diffusion method. FIGS. 13A and 14A show the printed states in the standard mode, and in this state, since the image density is determined by black and white pixels of the same number, black and white portions are alternately arranged for each pixel unit. FIG. 13A, 13C and FIGS. 14B, 14C show the printed states set according to changing density data, and in this state, the ratio of the white and black areas is changed to represent halftones.

FIGS. 13A to 13C show a case wherein a method for extending the black portion from the left end portion of a target pixel as shown in FIG. 11 is used. That is, the standard state shown in FIG. 13A is set as the stage "4" and FIG. 13B shows the printed states in which the density is lowered and the density is lowered in the order of the stages "3", "2", "1" of the changing density data. FIG. 13C shows the printed states in which the density is increased and the density is made higher in the order of the stages "5", "6", "7" of the changing density data.

FIGS. 14A to 14C show a case wherein a method for extending the black portion from the central portion of a pixel as shown in FIG. 12 is used. That is, the standard state shown in FIG. 14A is set as the stage "4" and FIG. 14B shows the printed states in which the density is lowered and the density is lowered in the order of the stages "3", "2", "1" of the changing density data. FIG. 14C shows the printed states in which the density is increased and the density is made higher in the order of the stages "5", "6", "7" of the changing density data.

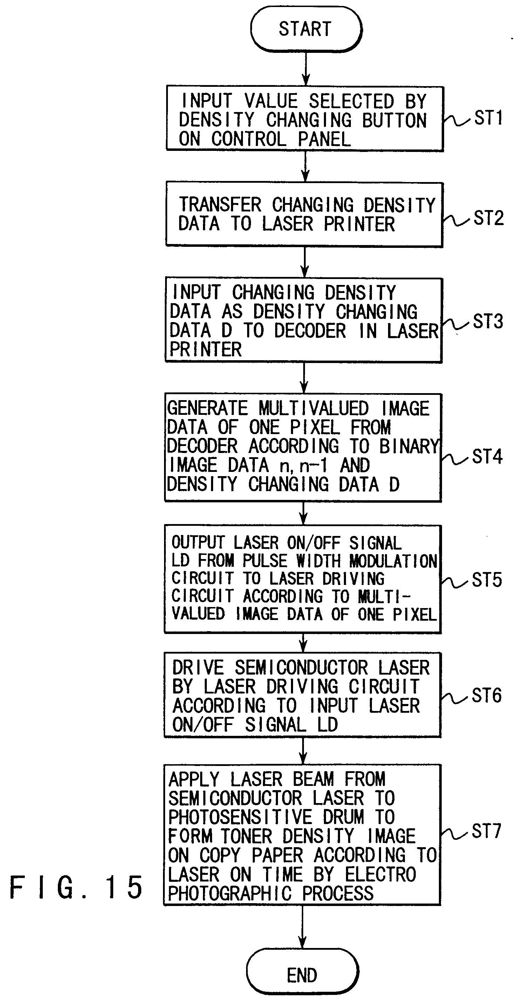

Next, the operation of the digital copying machine 1 having the laser printer 160 as a component thereof is explained with reference to a flowchart of FIG. 15. When binary image data temporarily stored in the memory 303 is printed by the laser printer 160, density data determined by the selecting operation of the density changing button section 501 is supplied to the laser printer 160 as changing density data so as to change the density in the laser printer 160.

First, the controller 304 inputs changing density data which is selected by use of the density changing button section 501 on the control panel 305 according to the requirement of the user (ST1) and transfers the changing density data to the laser printer 160 (ST2). The default value of the changing density data is "4".

The changing density data is transferred to the image processing circuit 101 via the control circuit 109 of the laser printer 160. In the image processing circuit 101, the changing density data is latched in the register 401 and input to the decoder 403 as density changing data D[2:0] (ST3).

Binary image data items n and (n-1) input to the decoder 403 are binary image data obtained by latching binary image data VD transferred from the memory 303 via the image processor 301 into the flip-flop 400 and into the flip-flop 402.

The decoder 403 used as generating means generates multivalued image data (or multivalued pixel data) for each pixel according to the binary image data items n and (n-1) and density changing data D[2:0] (ST4).

The multivalued image data is latched into the flip-flop 404 and then input to the pulse width modulation circuit 405. The pulse width modulation circuit 405 selects one of the five divided stages of the laser ON time period for one pixel and generates a laser ON/OFF signal LD indicating a corresponding one of five stages of density to the laser driving circuit 102 (ST5).

The laser driving circuit 102 drives the semiconductor laser 60 according to the input laser ON/OFF signal LD (ST6) and causes the laser beam from the semiconductor laser 60 to be applied to the photosensitive drum 50 so as to produce a toner density image on the copy paper P according to the laser ON time by the electrophotographic process (ST7).

As described above, in the image forming apparatus according to this invention, gradation image data read by the scanner 140 is processed in the image processor 301 and then stored into the memory 303 as binary image data. The density of the binary image data stored in the memory 303 is changed according to changing density data selected by use of the density changing button section 501 on the control panel 305 and an image output of high or low density is derived from the laser printer 160. That is, a copy image of high or low density can be obtained by using binary image data temporarily stored in the memory 303. That is, it is not necessary to scan the document again by the scanner 140 when the density is changed and the same image with the changed density is copied.

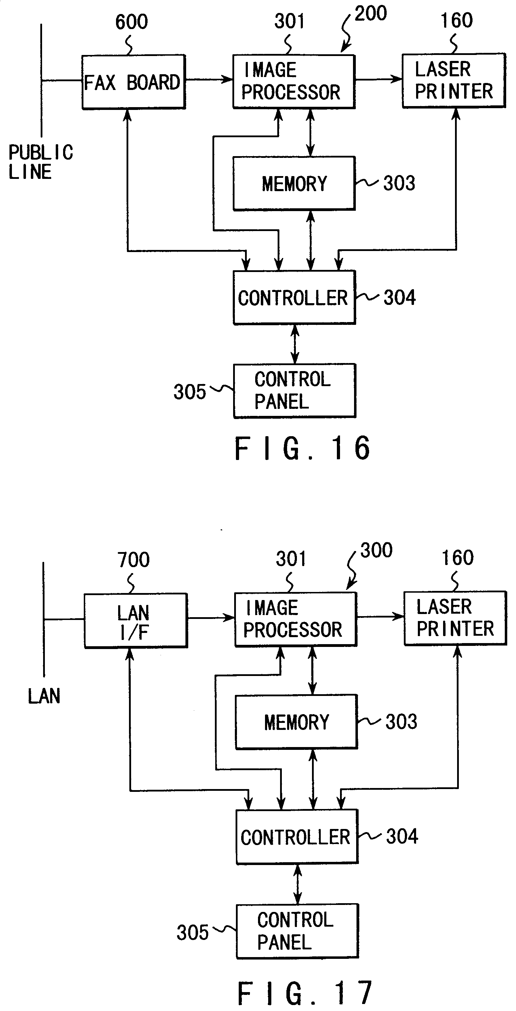

FIG. 16 shows the whole construction of a digital copying machine 200 with a FAX board for storing binary image data into a memory. That is, the FAX board is used instead of the scanner 140 in the digital copying machine 1 shown in FIG. 2. In FIG. 16, portions which are the same as those of the digital copying machine 1 shown in FIG. 2 are denoted by the same reference numerals and the explanation therefor is omitted.

A FAX board 600 for receiving binary image data transferred via a public line such as a telephone line is provided in the digital copying machine 200 and the controller 304 stores binary image data transferred from the FAX board 600 into the memory 303.

The controller 304 drives the laser printer 160 based on the binary image data stored in the memory 303 and the laser printer 160 outputs an image of high or low density according to the density selected by use of the density changing button section 501 on the control panel 305.

FIG. 17 shows the whole construction of a digital copying machine 300 with a LAN I/F (interface). That is, A LAN I/F 700 is used instead of the scanner 140 in the digital copying machine 1 shown in FIG. 2. In FIG. 17, portions which are the same as those of the digital copying machine 1 shown in FIG. 2 are denoted by the same reference numerals and the explanation therefor is omitted.

The LAN I/F 700 for receiving binary image data transferred via a LAN line is provided in the digital copying machine 300 and the controller 304 stores binary image data transferred from the LAN I/F 700 into the memory 303.

The controller 304 drives the laser printer 160 based on the binary image data stored in the memory 303 and the laser printer 160 outputs an image of high or low density according to the density selected by use of the density changing button section 501 on the control panel 305.

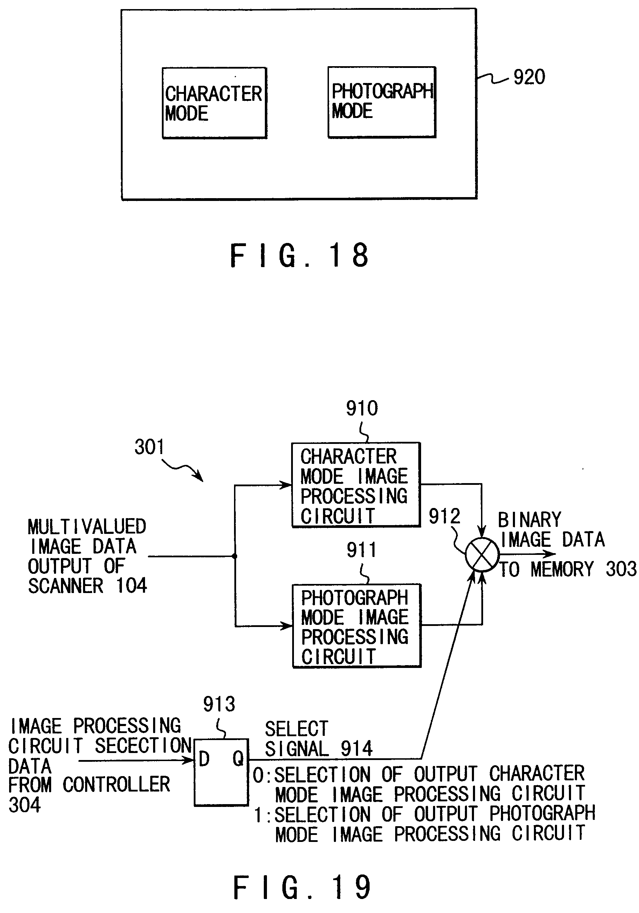

FIG. 18 shows a mode setting button section 920 which is part of the control panel 305. The image processor 301 selectively effects one of the different processing methods according to whether the document is a character image or photographic image and the processing method is determined by the user by operating the mode setting button section 920 to select the character mode or photograph mode.

The mode setting button section 920 used as selecting means contains LEDs and the LED for the selected button is turned ON so that the user can easily recognize the selected mode. The initial state is set to the character mode, and when the photograph mode is selected, the LED for the character mode is turned OFF and the LED for the photograph mode is turned ON. When the character mode is selected while the LED for the photograph mode is lit, the LED for the photograph mode is turned OFF and the LED for the character mode is turned ON.

FIG. 19 illustrates the selecting process of the image processing circuit in the image processor 301. Mode data selected in the mode setting button section 920 is read by the controller 304 and latched into a flip-flop 913 as image processing circuit selection data. The latched data is used as a select signal 914 for controlling a selector 912 for selecting binary image data from a character mode image processing circuit 910 or photograph mode image processing circuit 911. When the select signal 914 is "0", an output of the character mode image processing circuit 910 is selected, and when the select signal 914 is "1", an output of the photograph mode image processing circuit 911 is selected.

The character mode image processing circuit 910 used as first conversion means converts multivalued data from the scanner 140 into binary image data in the character mode. The photograph mode image processing circuit 911 used as second conversion means converts multivalued data from the scanner 140 into binary image data in the photograph mode. The selected binary image data is transferred to the memory 303.

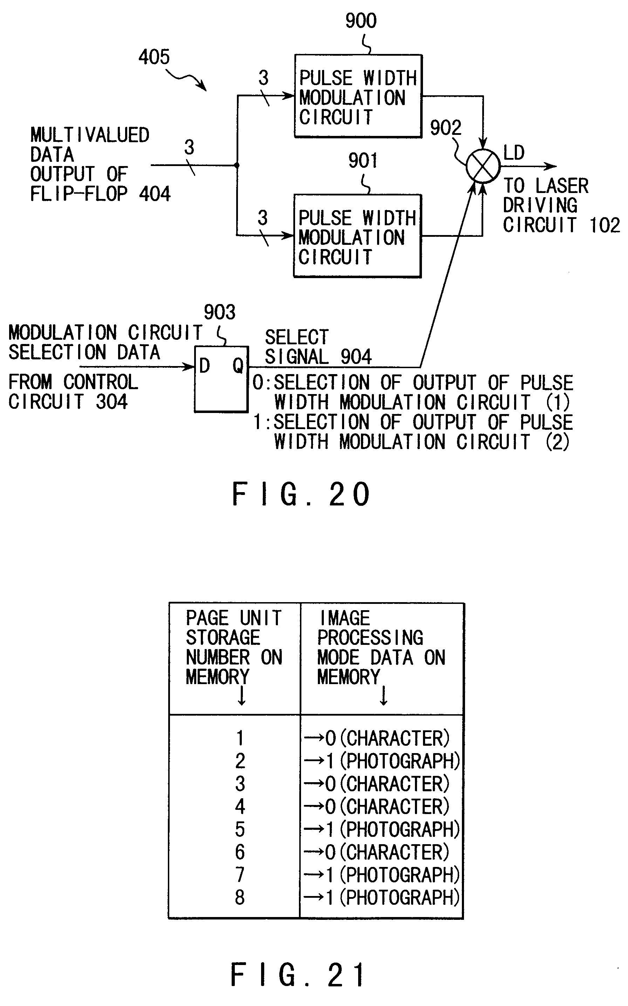

FIG. 20 illustrates the selecting process of the pulse width modulation circuit in the pulse width modulation circuit 405. Mode data selected in the mode setting button section 920 is read by the controller 304, transferred to the control circuit in the laser printer 160 and then latched into a flip-flop 903 as modulation circuit selection data.

The latched data is used as a select signal 904 for controlling a selector 902 for selecting a pulse signal from a pulse width modulation circuit 900 or 901. When the select signal 904 is "0", an output of the pulse width modulation circuit 900 is selected, and when the select signal 904 is "1", an output of the pulse width modulation circuit 901 is selected.

The pulse width modulation circuit 900 used as first pulse width modulation means is a pulse width modulation circuit for modulating a driving pulse for driving the semiconductor laser 60 according to the continuous pulse width from the rise of one pixel. The pulse width modulation circuit 901 used as second pulse width modulation means is a pulse width modulation circuit for modulating a driving pulse for driving the semiconductor laser 60 according to the pulse width in the central portion of a pixel. A selected pulse signal LD is transferred to the laser driving circuit 102.

The user can select the pulse width modulation circuit when binary image data stored in the memory 303 is printed by use of the laser printer 160. That is, in a case where an image containing a large number of characters is converted into binary image data and stored into the memory 303, the pulse width modulation circuit 900 can be selected, and in a case where an image containing a large number of halftones is converted into binary image data and stored into the memory 303, the pulse width modulation circuit 901 can be selected.

As a result, if it is required to keep the sharpness of the edge portion of a character image, the pulse width modulation circuit 900 for effecting the modulation according to the continuous pulse width from the rise of one pixel can be selected, and in a case where the gradation image processing for a photographic image is effected, the pulse width modulation circuit 901 for effecting the modulation according to the pulse width in the central portion of the pixel for each pixel to prevent occurrence of moire without concentrating the black pixels can be selected.

FIG. 21 illustrates a method for processing image data read by the scanner 140 in the image processor 301 and storing image processing mode data of page unit into the memory 303.

Data of "0" or "1" is stored as image processing mode data for page unit storage numbers (1 to 8) on the memory. Data "0" indicates the character mode and data "1" indicates the photograph mode. When image data from the scanner 140 is converted into binary image data in the image processing circuit 301 and stored into the memory 303, different page unit management numbers are allotted to the respective pages. The image processing mode set when the image is processed in the image processor 301 is stored as an on-memory image processing mode together with image data and the page unit management number in the memory 303.

The document reading operation by the scanner 140 is started by depressing a start button (not shown) on the control panel 305, but before the reading operation, the controller 304 reads the state of the mode setting button section 920 and stores mode data indicating the character mode or photograph mode as on-memory processing mode data together with the page unit storage number into the memory 303. This operation is repeatedly effected for each page. That is, the user selects the image mode by operating the mode setting button section 920 before reading each page by the scanner 140. However, if the digital copying machine can identify the image mode (a document of characters or a document containing a large photograph area) of the document, the image mode selecting process for each page can be automatically effected.

The page unit storage number is different for each page of image stored in the memory 303. It is cleared when the reading is unsuccessfully effected. Further, it is deleted when binary image data is deleted from the memory 303.

In a case where image data read by the scanner 140 is converted into binary image data in the image processor 301 and the binary image data is stored into the memory 303 and then printed by the laser printer 160, the select signal 904 for selecting the pulse width modulation circuit 900 or 901 shown in FIG. 20 is created based on on-memory image processing mode data stored in the memory 303.

At the time of printing by the laser printer 160, the controller 304 derives on-memory image processing mode data stored in the memory 303 based on the on-memory page unit storage number of to-be-printed image data immediately before the printing process in the page unit and transfers the same to the control circuit 109 in the laser printer 160.

The control circuit 109 latches the on-memory image processing mode data into the flip-flop 903 as modulation circuit selection data. The latched data is used as the select signal 904 to control the selector 903 for selecting the pulse signal from the pulse width modulation circuit 900 or 901. When the select signal 904 is "0", an output of the pulse width modulation circuit 900 is selected, and when the select signal 904 is "1", an output of the pulse width modulation circuit 901 is selected.

As described above, according to the embodiment of this invention, unlike the prior art, the software process is not used for processing image data, and the image data can be printed at high speed, and since the process condition is not changed, the density can be stably changed, thereby making it possible to prevent occurrence of a problem that toner is attached to a white image portion to produce a black portion in the white image area as in the conventional case.

## Claims

1. An image forming apparatus (1) for forming an image on an image bearing member by scanning light from a light source (60), characterized by comprising:
means (300) for storing binary image data;
means (305) for specifying the density used when an image is formed based on the binary image data stored in said storage means (300);
means (101) for generating light emission time length data of said light source for each pixel at the scanning, according to the binary image data stored in said storage means (300) and density data specified by said specifying means (305); and
means (102) for changing the light application time period of said light source for each pixel according to the light emission time length data of each pixel at the scanning, generated from said generation means (101) to form an image which has the specified density.

2. An apparatus according to claim 1, characterized in that said light source (60) is a semiconductor laser, said generation means (101) includes second generation means (403) for generating multivalued gradation data for each pixel derived based on the density data and binary image data, and said changing means (102) includes means (405) for controlling the laser beam application time period of said semiconductor laser for each pixel according to the multivalued gradation data generated from said second generation means (403).

3. An apparatus according to claim 2, characterized in that said second generation means (403) includes third generation means for generating multivalued gradation data derived based on the density data and binary image data and used for enhancing the density of a white pixel adjacent to one black pixel when the image density is enhanced and lowering the density of one black pixel itself when the image density is lowered.

4. An apparatus according to claim 2, characterized by further comprising pulse width modulation means (405) for modulating the pulse width of a driving pulse for driving said semiconductor laser (60) according to the multivalued gradation data generated from said second generation means (403); and laser driving means (102) for driving said semiconductor laser with the pulse width modulated by said pulse width modulation means (405).

5. An apparatus according to claim 4, characterized in that said pulse width modulation means (405) includes means (FIG. 11) for modulating the driving pulse for driving said semiconductor laser by use of the pulse width from the rise of each pixel according to the multivalued gradation data generated from said second generation means (403).

6. An apparatus according to claim 4, characterized in that said pulse width modulation means (405) includes means (FIG. 12) for modulating the driving pulse for driving said semiconductor laser by use of the pulse width whose center is set to correspond to the pixel center of each pixel according to the multivalued gradation data generated from said second generation means.

7. An apparatus according to claim 4, characterized by further comprising:
first pulse width modulation means (FIG. 11) for modulating the driving pulse for driving said semiconductor laser (60) by use of the pulse width from the rise of each pixel according to the multivalued gradation data generated from said second generation means (403);
second pulse width modulation means (FIG. 12) for modulating the driving pulse for driving said semiconductor laser (60) by use of the pulse width whose center is set to correspond to the pixel center of each pixel according to the multivalued gradation data generated from said second generation means (403); and
means (902) for selecting one of said first and second pulse width modulation means;
wherein said laser driving means (102) drives said semiconductor laser according to the pulse width modulated by one of said first and second pulse width modulation means selected by said selection means (902).

8. An apparatus according to claim 1, characterized by further comprising reception means (600) connected to a public line, for receiving binary image data transmitted via facsimile, wherein said storage means (300) stores the binary image data received by said reception means (600).

9. An apparatus according to claim 1, characterized by further comprising reception means (700) connected to a LAN line, for receiving binary image data transmitted via the LAN line, wherein said storage means (300) stores the binary image data received by said reception means (700).

10. An apparatus according to claim 7, further comprising:
means (140) for reading an image of a document;
first conversion means (910) for converting gradation image data read by said reading means (140) into binary image data in a character mode;
second conversion means (911) for converting gradation image data read by said reading means into binary image data in a photograph mode; and
second selection means (912) for selecting one of said first and second conversion means;
wherein said storage means (300) stores the binary image data converted by one of said first and second conversion means selected by said second selection means (912).
